# EUROPEAN PATENT APPLICATION

(11) **EP 1 148 667 A1**
(43) Date of publication of application: **24.10.2001**
(21) Application number: 00850073.8
(22) Date of filing: 20.04.2000
(51) Int. Cl.: H04B 10/18

(54) **A multi-wavelength/multi-channel optical system**

(71) Applicant: TELEFONAKTIEBOLAGET L M ERICSSON (publ), 126 25 Stockholm (SE)
(72) Inventor: Särkimukka, Stig, 113 41 Stockholm (SE); Djupsjöbacka, Anders, 169 30 Solna (SE); Gavler, Anders, 104 05 Stockholm (SE)
(74) Representative: Rosenquist, Per Olof

(57) **Abstract**

In a fiber-optical WDM-transmission system channel switching is used to achieve a high transmission capability and/or quality in spite of the polarization mode dispersion experienced by pulses propagating along an optical fiber. The WDM-channels having best transmission properties among the available WDM-channels are used to transmit high-priority traffic, the remaining channels being used for e.g. low-priority traffic. The high- and low-priority information arrives on input lines (3, 4) and is switched in a cross-connect element (7) coupling the high-priority information to the best channels and the other information to the other channels, the channels being combined in a multiplexer (9) to be injected in the transmission fiber (1). The light propagating in the fiber is divided into the respective channels by a demultiplexer (11) which are converted to electrical signals by receivers (15) and provided to a cross-connect element (13) switching the channels carrying the high-priority information to output lines (17) and those carrying the low-priority information to other output lines (18). The receivers provide a measure of the transmission quality of the received channels to a control unit (19) which sends signals to the cross-connect elements controlling the switching thereof.

## Description

### TECHNICAL FIELD

The present invention relates to multi-wavelength/multi-channel systems.

### BACKGROUND

Polarisation mode dispersion (PMD) is a phenomenon that leads to stochastic pulse dispersion in optical fibers and on many installed fiber-optical links PMD is the major obstacle for increased bit-rates. Polarisation mode dispersion arises in optical single-mode fibers when the cylindrical symmetry is broken due to existence of a non-circular core or non-circular, asymmetric stresses. The loss of circular symmetry destroys the degeneracy of the two eigen-polarisation modes in the optical fiber, which will cause different group velocities for these modes. In standard single mode optical fibers PMD is random varying from one fiber to another fiber. Moreover, in the same fiber PMD will vary at random with respect to wavelength and ambient temperature. This behaviour is explained by different geometrical stress irregularities along the fiber-length combined with coherent interference between the two eigen-polarisation modes. Since there is a lot of crosscoupling points in the fiber, in which coherent interference occur, the final result can be described as a random-walk process.

A random-walk process has a statistical nature and in the case of PMD, which has three degrees of freedom, the statistical distribution is described by a Maxwellian distribution. Since PMD has a statistical nature, it is common to denote a single outcome of the statistical process as a differential group delay (DGD) whereas PMD considered as a numerical value is the expected mean value of the same process. Since PMD has a statistical nature in contrast of e.g. fiber losses and fiber dispersion, which have static behaviours, it is extremely important that a measurement and compensation method for PMD can really handle this statistical nature and does not consider a single outcome of the statistical process as an ensemble average or vice versa.

Due to the statistical nature of PMD (and DGD), PMD cannot be compensated or mitigated with fixed compensators. All PMD compensation techniques must therefore rely on feedback systems. Up to now PMD has been compensated or mitigated on single channel basis with rather modest results. Then so called first order compensators have been most frequently used which cannot entirely compensate for PMD.

### STATE OF THE ART

The usual research approach of combating PMD is to install some kind of compensation scheme, in the electrical or optical domain, thereby improving the statistics of a single channel.

There have been several published articles on compensation of PMD, see e.g. M.W. Chbat et al., "Long Term Field Demonstration of Optical PMD Compensation on an installed OC-192 Link", OFC' 99, 12.1 - 12.3/PD, (1999), H. Bülow, "Limitation of Optical First-Order PMD Compensation", OFC/IOOC '99, Techn. Digest, 2, 74 - 76, (1999), H. Ooi et al., "Automatic polarization-mode dispersion compensation in 40-Git/s transmission", OFC' 99, pp. 86 - 88/WE5-1, 1999, D.A. Watley et al., "Compensation of polarization-mode dispersion exceeding one bit period using single high-birefringence fibre", Electron. Lett., 35, 1094 - 95, (1999), R. Noe et al., "Integrated optical LiNbO3, distributed polarization mode dispersion compensator in 20 Gbit/s transmission system", Electron. Lett., 35, 652 - 54, (1999). However, few articles even ponder on the system perspective of compensation and the hard systems requirements on low BER-rates in the long run. Also, some patent applications are concerned with compensation of PMD. Thus, in the published European patent application 0 798 883, inventor H. Bülow, an optical receiver having an equalizer for polarization mode dispersion interference is disclosed. In the published Japanese patent application 07231297 an optical fiber polarisation mode dispersion compensation device is disclosed. Further, in the German published patent application 1018699 a compensation system minimizing signal distortion caused by polarization mode dispersion is disclosed. In the published British patent application 2 338 131 a dispersion compensation method with low polarization mode dispersion is disclosed. In the published European patent application another method of compensation of polarization mode dispersion is disclosed.

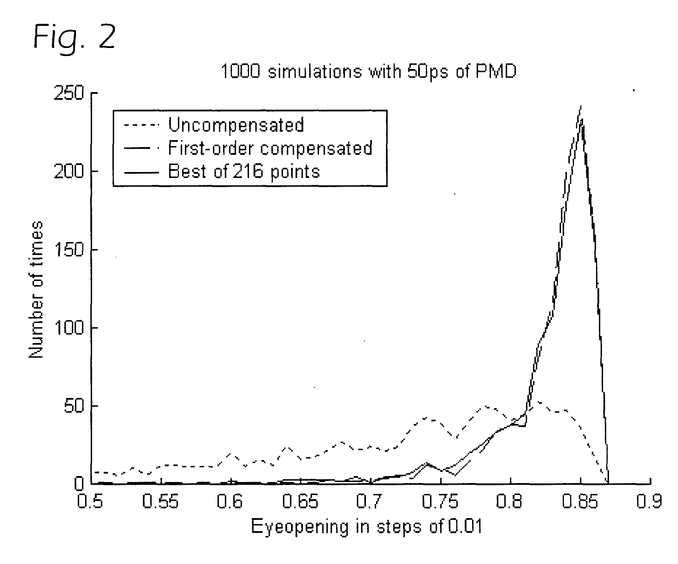

Authors of articles on compensation and patent applications concerned with compensation devices/methods normally show how they have been able to compensate for a certain amount of PMD, during a time-span limited to some hours or a few days, but none has ever published a method or an experiment that would meet normal system requirements on e.g. a year basis. The reason is that it is, using the technology of today, hard or impossible to substantially compensate for all statistical outcomes of PMD induced pulse distortion in a single channel. In the diagram of Fig. 2, the resulting stochastic variations in the eye opening of a channel before and after compensation are seen. The link used had 50 ps of PMD and was operated at 10 Gbit/s using NRZ (Non Return to Zero) data format modulation. The eye opening is defined as the relative difference in time between the marks '1' and '0' in the NRZ data stream in relation to a received ideal or completely symmetric bitstream which has an eye-opening equal to one.

The average eye opening after first-order compensation in Fig. 2 is 82%, but the interesting information obtained from this figure is that the tail of the distribution is wide. This gives quality problems, because for a certain eye-opening, PMD compensators used today are not capable of giving a satisfactory compensation. This results in periods of time having unacceptable high BERs (Bit Error Rates) and therefore research is focusing on how to compensate for situations having varying eye-openings such as those illustrated by Fig. 2. Note that when the eye-opening increases the BER decreases.

### SUMMARY

The main problem solved by the invention is how to construct a compensation scheme that really works in the tail of the PMD distribution as depicted in Fig. 2.

The present invention does not try to fight the tail of the PMD distribution as seen in Fig. 2, but instead a switch-over to another channel where the DGD is lower is made.

Using, as proposed herein, switching in some layer it is possible to construct low error multi-channel systems even if individual channels, uncompensated or compensated, have unsatisfying performance ratios. Thereby total system bit-rates can be increased on links where PMD is a limiting factor. As a consequence, switching makes it possible to exploit the performance improvements of the PMD-compensators of today, even if they are too poor to be used on a single channel basis.

Thus generally, an optical transmission WDM-system is considered which comprises a transmitting side and a receiving side and an optical fiber link connecting the transmitting and receiving sides. High-priority information is transmitted in the optical fiber link from the transmitting side to the receiving side as light signals in a plurality of wavelength bands. The wavelength bands have different transmission characteristics and transmission characteristics varying with time. Typically they can have different polarization mode dispersions and/or polarization mode dispersions varying with time.

The WDM-system further comprises switching means for transmitting the high-priority information in a number of the wavelength bands which is smaller than the total number of wavelength bands and control means connected to the switching means for at each instant selecting the wavelength bands used for transmitting the high-priority information to give a sufficient total quality of the transmission of the high-priority information. For making the selecting properly a quality determining device can connected at the receiving side for determining the quality of transmission in each of the wavelength bands. Such a devices then provides a signal representing determined quality values to the control means.

The switching means preferably comprise cross-connect elements, a first cross-connect element connected at the transmitting side and a second cross-connect element connected at the receiving side. The first cross-connect element then has one output terminal for each of the plurality of wavelength bands and the second cross-connect element has one input terminal for each of the plurality of wavelength bands. The cross-connect elements can be arranged to switch electrical or optical signals. The switching means on the transmitting side can also comprise tuneable electro-optical transmitters.

The system can also be used for also transmitting low-priority information on the optical fiber link and then the control means are arranged to select the wavelength channels not used for transmitting the high-priority information for transmitting the low-priority information.

Compensators for compensating polarization mode dispersion can be arranged for each wavelength channel used and be connected at one end of the fiber optical link to even more improve the capacity of the system.

### BRIEF DESCRIPTION OF THE DRAWINGS

The invention will now be described by way of non limiting embodiments with reference to the accompanying drawings, in which:
- Fig. 1 is a diagram in which the differential group delay (DGD) for optical transmission in a fiber length is plotted as a function of frequency for PMD values of 10, 25 and 50 ps, the frequency range corresponding to six channels,
- Fig. 2 is a diagram for optical transmission on a fiber-optical transmission link having 50 ps of a stochastically varying PMD in which the number of times an eye opening is within intervals having a width of 0.01 and located between 0 and 1 is plotted as a function of the width of the eye opening for 1000 simulations,
- Fig. 3 is a grey-scale plot of DGD as a function of time and wavelength for an optical WDM-transmission link having 10 WDM-channels,
- Fig. 4 is a diagram of success-ratio and probability that at least 12 channels out of 16 channels have an acceptable success-ratio as functions of PMD,
- Fig. 5 is a block diagram of a fiber-optical WDM-transmission link using switching in the electrical domain to overcome PMD-problems, and
- Fig. 6 is block diagram of a fiber-optical WDM-transmission link using switching in the optical domain to overcome PMD problems.

### DESCRIPTION OF PREFERRED EMBODIMENTS

Hereinafter a switched method for compensating PMD in a fiber-optical WDM-transmission link will be explained, the explanation being made in three steps.

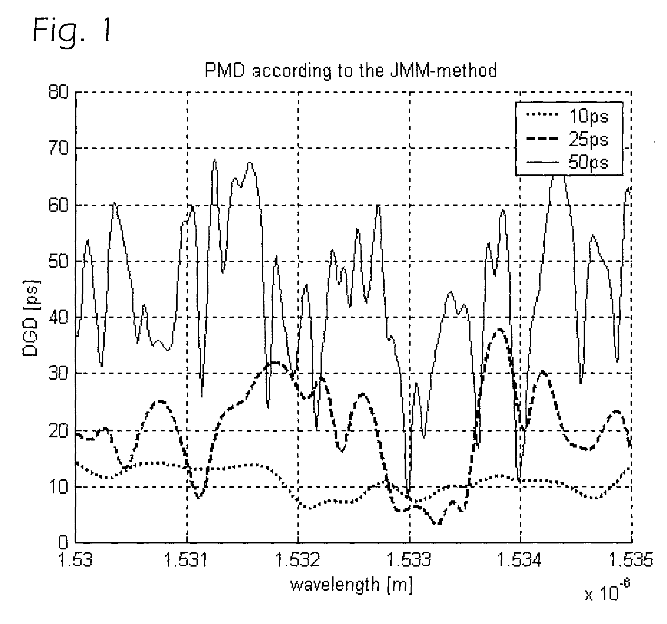

In the first step the statistics of PMD will be reviewed. In the diagram of Fig. 1 the differential group delay (DGD) is plotted as a function of frequency for optical transmission over links having PMD values of 10, 25 and 50 ps respectively. It can be observed that the DGD varies with the wavelength in a more or less irregular way. Generally also, in a WDM system using transmission over a fiber-link subjected to PMD, the DGDs for different channels vary in time compared to each other. However, according to a first-order approximation the time variations for all channels are centred on the same DGD, i.e. all channels experience the same average PMD. The frequency range shown in Fig. 1 corresponds to six WDM channels with 0.8 nm wavelength spacing, each channel occupying an individual frequency band and the individual bands being separated by unused guard bands. The irregularity of the DGD as a function of wavelength increases with the PMD value and for PMD values over approximately 10 ps there is no correlation of the DGD of channels adjacent each other, i.e. between neighbouring channels, and of course not between channels having wavelengths differing even more. For a very high PMD the DGDs of the channels can be highly unstable also within a channel, but links having such high PMDs are not considered here. To sum up the first step: in a wavelength division multiplexed (WDM) system, the DGD is different for every channel and the DGD varies with time, but it is not very probable that distortion induced by PMD forces all channels to be out or down at the same time.

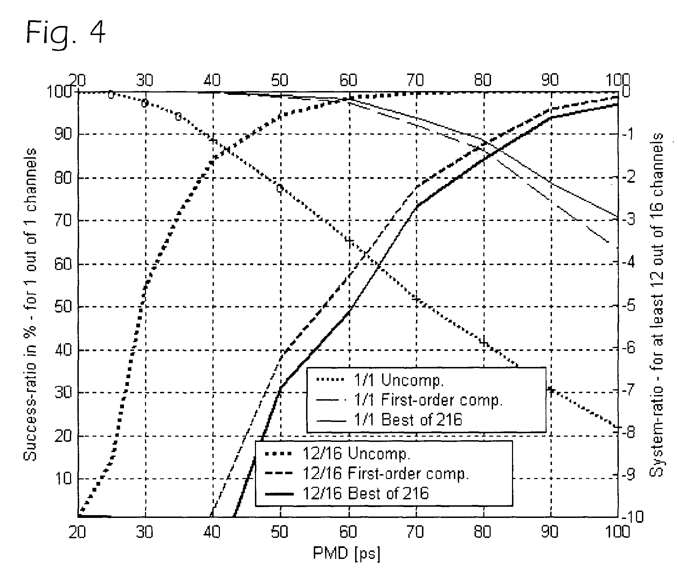

In the second step a success-ratio and a success-limit are defined. In Fig. 2, which has already been briefly discussed, for transmission over an optical fiber WDM-link having a PMD value of 50 ps for a 10 Gbit/s signal, PMD-induced stochastic variations of the width of the eye-opening of a channel before and after compensation are illustrated, the compensator device used being a prior art first-order type. In this figure thus the number of times the eye opening is within 0.01 intervals between 0 and 1 for 1000 simulations, e.g. measurement situations, is plotted. The solid line is drawn for a transmission using a compensator. The dotted line is drawn for the standard case when no compensator is used. The opto-electrical receiver receiving and detecting the transmitted optical pulses is here supposed to comprise a 4th order Bessel-Thompson LP-filter setting the upper limit of the eye-opening to be equal to 0.87. In Fig. 2 it is further assumed that the receiver as limited by thermal noise should have a BER (Bit Error Rate) of 10⁻⁶ for an eye-opening of 0.63, which we call a success-limit (this limit corresponds to a 2 dB penalty in the eye-opening). For higher eye-openings the BER is better, i.e. lower. As is seen in the figure, the compensator managed to keep the eye-opening over the success-limit of 0.63 in 990 of 1000 situations, which gives a success-ratio of 99 %. This means that the compensator did not work in 10 out of 1000 measurement situations even if the average eye opening was 0.82. Thereafter we calculate the above mentioned success-ratio for a number, e.g. 1000, of uncorrelated samples at several different PMD values in the range between 20 and 100 ps. The success-ratio versus the PMD value at 10 Gbit/s is plotted in Fig. 4. The left y-axis refers to the lines starting in the upper left corner, defining the ratio in percentage of eye openings with a less than 2 dB penalty, i.e. success-ratio, in single channels versus PMD. The solid lines are drawn for an uncompensated signal, the dashed lines for a simulated practical limit for first order compensation and the dotted lines for a simulated compensation system.

In the third step will be described how switching in WDM systems can combat the degenerating effect PMD has on pulse shapes, if the system is considered as a unit. Using this approach it is possible to construct an acceptable system at PMD/Timeslot-ratios much higher than allowed before, because the switching allows single channels to work with a relatively high probability of failure. The switching will in addition allow exploitation of the performance improvement of PMD-compensators, even if present compensators are to poor to be used on a single channel basis. In this way high-quality transmission-capacity can be guaranteed in compensated and uncompensated systems, to a higher extent than in systems using only compensator devices for compensation in single channels. It should be observed that this approach is allowed by the observations and the approximation of the first step and the success-ratio and the success-limit defined in the second step.

In the method as disclosed herein a channel is not considered as unusable when the probability that the channel will be out is lower than e.g. 99.9999 %, which is a normal quality level in telecommunication systems (this level can also be interpreted as a 10⁻⁶ risk of failure). Instead the system is considered as one unit that in a typical embodiment should have 12 working channels of a total number of 16 channels, with a probability higher than 99.9999 %. Thereby it is possible to calculate the probability, for different PMD-values, that at least 12 out of 16 channels should have a BER lower than 10⁻⁶. At the 10⁻⁶-level the success-ratio for a single channel is approximately 99 %. Up to now, an optical channel with a 99 % probability for failure has been considered unusable, whereas using the method and device as described herein it is considered to be usable most of the time.

In Fig. 4, the probability that less than 12 out of 16 channels should be working based on the probabilities from the single channels is plotted. The right y-axis refers to the thicker lines starting in the lower left corner, defining the ratio for a system failure. The latter ratio is calculated as if all 16 channels in a system had the same success percentage at a given PMD. A situation where less than 12 channels are working is considered as a failure. The number of channels and the minimum number of working channels were arbitrarily chosen. In a real system the optimal choice of such parameters would also depend on parameters like systems- and link-statistics, price, management and choice of protection layer. The 12 of a total of 16 lines in Fig. 4 were calculated using a binomial distribution, under the assumption that the performances of the channels were totally uncorrelated. The lines thereby represent the situations where 16, 15, 14, 13 or 12 of the total of 16 channels are working. This statistical treatment was allowed under the assumption made herein that every channel experiences approximately the same PMD and thereby has the same probability of success. It shall be observed that other distributions could be used to calculate the protection level, but the basic idea to combat PMD by switching in WDM- systems remains the same. As can be seen from the right y-axis in Fig. 4, a 10⁻⁶ probability for a failure of the WDM-system considered as a unit is found at PMD/T-ratios slightly over 0.5 for a first-order compensated system. For an uncompensated system the PMD/T-limit is 0.25.

Furthermore, the system-ratio will be 99.95% for 14 of 16 channels or more and 84% for 16 out of 16 channels. This means that one fourth (1/4) of the system capacity could be used for low priority traffic 84% of the time and three fourths (3/4) of the traffic could be guaranteed to a very high degree all the time.

To conclude: if a system has a plurality of channels and switching is allowed it is possible to construct an acceptable system even if a single channel has a relatively high probability of failure. The trick is to consider the system as a single unit in which success is defined to exist when at least a minimum number of the channels are working.

The switched method or the method using switching to "best" channels can consequently be applied to reduce the degrading effects that PMD has on the signal quality, but the method when used will also combat other polarization-dependent phenomenon in optical fibers like e.g. four-wave mixing (FWM). Of course, the same switched method can also be advantageously applied to optical fiber WDM-links in which other phenomena occur provided that the signal quality of the channels substantially varies in time and between the different wavelength-channels.

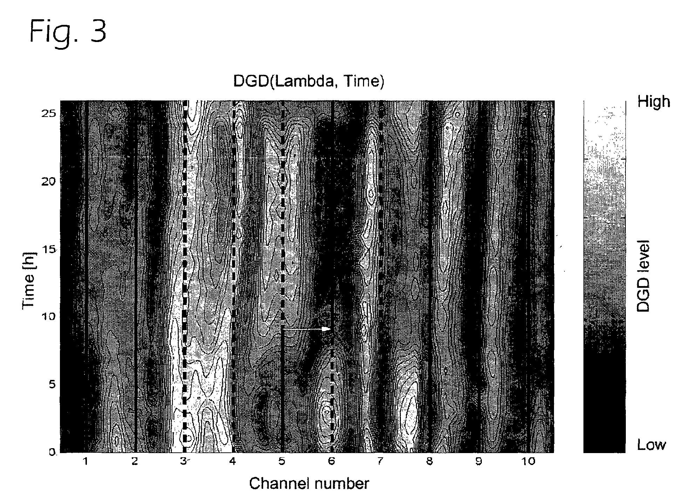

Switching of channels based on real data is illustrated by the diagram of Fig. 3 which is a wavelength-time resolved DGD plot, in which the wavelength is depicted on the x-axis and the time on the y-axis. The DGD-value for a specific time and a selected wavelength is represented as a grey scale in the corresponding point in the xy-plane. The solid black lines represent active channels, which are here separated by 1 nm, and the dashed black lines represent inactive channels. The white arrow indicates a channel switching occasion in which a channel having a high DGD is switched to another channel having a low DGD. This DGD plot is based on real measurements, but channel spacing, wavelength intervals, etc. have been changed for illustrative purposes. In this example 6 of a total of 10 channels are used, the figure showing only one channel switching during a time period of 26 hours.

The ITU-upper limit for PMD/T as well as a theoretical prediction of first order compensation with a BER of 10⁻⁶, the prediction being made as described in the article for H. Bülow cited above, and the results are listed in Table 1. It should be noted the statistical models differ between the rows of the table and they should therefore not be straightforwardly compared to each other.

Thus, in Table 1, the maximum allowed PMDs are listed in the second column and the average channel according to
- the ITU recommendations
- theoretical first ordered compensation
- switching based on a 1 % probability for failure in a single channel - with and without compensation are listed in the third column.

**Table 1:**

| Maximum PMD and average channel capacity of a 16-channel example system for four different system models. | | |
|---|---|---|
| Method | Max PMD | Average Channel Capacity |
| ITU | 0.1 T | 16/16B |
| Theoretical compensation limit | 0.35 T | 16/16B |
| Switched | 0.25 T | 12/16B |
| Switched and compensated | 0.5 T | 12/16B |

In protocols used in optical transmission systems there are checksums in the header which could be used to continuously monitor the status of a channel and measure the quality of the link. These checksums could be used to take a decision whether a channel switching shall occur or not. However, both the monitoring and the switching can be done at several different layers.

The most often presented compensating methods suggest compensation by control of 5 launch polarisation, adjustment of signal-polarisation along the way or compensators in the electrical or optical domain before or after the receivers on the receiving side, but the switched and compensation method is not dependent on compensation layer. As long as the compensators for the channels improve the signal quality they can be used together with the switched method as disclosed herein.

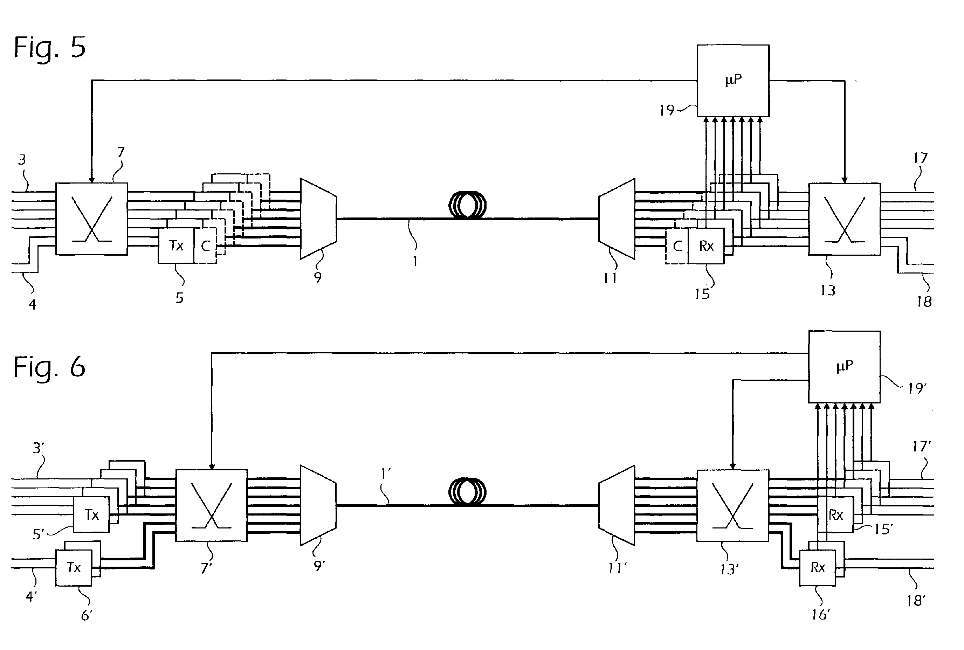

In Fig. 5 a block diagram of a WDM-transmission system is shown, the system using switching in the electrical domain to achieve a high transmission capability and/or quality in spite of PMD. Thus, in the illustrated example five information channels of a total of seven available channels are used to transmit high-priority traffic from the transmit side to the receive side over the long-haul optical fiber 1, the remaining 5 information channels being used for e.g. monitoring traffic quality or for low-priority traffic. The number of high-priority channels is chosen as an example and could typically be 12, and the total number of channels could typically be 16. The high-priority channels can be considered as separate bit streams arriving as serial sequences of electrical pulses on parallel electrical input lines 3 and monitoring or low-priority traffic can arrive in the same manner on additional parallel electrical input lines 4. The bit streams from all of the input lines 3, 4 passes an electrical cross-connect element 7 and are then received by separate transmitters 5 comprising electronic circuits for arranging the data of the input information streams in a format suitable for optical transmission. The transmitters 5 also include electro-optical converters such as semiconductor lasers and/or external 5 modulators. The transmitters 5 provide serial streams of light pulses on their output terminals, the wavelengths of which are, in the implementation of Fig. 5, critical. In a suggested implementation the switching could be controlled by monitoring the signal quality on the receive side. In the proposed protocols used in optical transmission systems there are header-bytes, e.g. the J0 and the B1 bytes in a SDH-frame (Synchronous Digital Hierarchy frame), which can be used to continuously monitor the status of a channel and measure the quality of the traffic. These header-bytes could be used to take a decision whether a channel switching shall occur or not. Here, it is essential that the signal quality is monitored for all channels in the WDM-system, i.e. even for the channels not currently used for high-priority traffic. However, both the monitoring and the switching can be 5 done at several different layers, but the basic idea remains the same.

In the system illustrated in Fig. 5, the transmitters 5 must be designed to provide light signals of well defined, fixed wavelengths and there must be one transmitter 5 for each wavelength band used. The electrical input lines 3 are here connected to the input terminals of the transmitters 5. The electrical cross-connect element 7 has an equal number of input terminals of output terminals, the number being equal to the total number of WDM-channels existing in the transmission system. The cross-connect element 7 receives a control signal from a control unit 19, commanding which input terminal shall be connected to which output terminal. Each of the output terminals of the element 7 is connected to an individual transmitter 5 and the optical signals from the transmitters are fed directly to the optical multiplexer 9 and then fed to the transmission fiber 1. The signal propagating in the fiber 1 will, at the receive side, be divided into the respective wavelength bands by the demultiplexer 11, which provides light-signals within the distinct bands directly to the receivers 15. Thus, the number of signals provided from the demultiplexer 11 is equal to the total number of wavelength channels used. In the example shown, seven different signals are filtered out and detected by the receivers 15. The resulting electrical signals are provided to the electrical cross-connect element 13 on the receive side in which the five electrical signals corresponding to the input information signals are provided to selected output terminals connected to output lines 17, these signals corresponding to the five wavelengths chosen for the five high-priority channels at the transmit side 3 of the system. The two remaining electrical signals are provided to other output lines 18 and correspond to the monitoring or low-priority traffic channels. The electrical signals obtained from the cross-connect element 13 are arranged so that the electric bit-streams on the electric output lines 17 agree with the input electrical bit-streams on the input lines 3 on the transmit side. The same is true of the input lines 4 and the output lines 18.

The electronic circuits of the receivers 15 are arranged to find some value of the quality of the received signals. For example they can evaluate check sums for received data packets, as described above, or determine BERs (Bit Error Rates). The quality value determined by each receiver is provided to the control unit 19 on the receive side. The control unit 19 evaluates the received quality values and decides whether the signals received by the receivers 15 have a sufficiently good quality, i.e. if the selected wavelength channels have a satisfactorily low PMD-distortion. If this is not true, the control unit 19 sends signals to the cross-connect elements 7 and 13 on the transmit and receive sides respectively to make a switch of one or more high-priority channels to wavelength channels used for low-priority traffic which are now considered usable for high-priority traffic. The electrical cross-connect elements 7 and 13 make the indicated switch and then the high-priority traffic is still transmitted over the optical fiber 1 in wavelength bands some of which now are changed.

In Fig. 6 a block diagram of another embodiment of a WDM-transmission system is shown. The incoming bit streams on electrical input lines 3' for high-priority traffic and lines 4' for low-priority traffic are received by separate transmitters 5', 6' respectively comprising electronic circuits for arranging the data of the input information streams in a format suitable for optical transmission. The transmitters 5', 6' provide serial streams of light pulses on their output terminals, the wavelengths not being critical, i.e. in this particular implementation. The light pulse streams are detected and switched in an optical/electrical/optical cross-connect element 7', which connects one of the input channels to a selected one of the output channels. The element 7' has a number of output terminals equal to the total number of WDM-channels existing in the transmission system. In the embodiment seven output terminals is shown, which could typically be 16. The cross-connect element 7' provides on each of its output terminals light signals of well defined, separate wavelength channels. In the embodiment shown only five of the input and output terminals of the element 7' will carry high-priority traffic signals corresponding to the electrical input channels on the lines 3', the remaining terminals being used for monitoring or low-priority traffic originating from the input lines 4'. The output terminals of the element 7' are connected to an optical multiplexer 9' which combines the input light beams into one light beam which is injected in the optical fiber 1' to propagate therealong to the receive side. On the receive side, the optical fiber 1' is connected to an optical demultiplexer 11' filtering out all the wavelength channels of the received light signal and providing them on separate output terminals to a receiving side optical cross-connect element 13'. Thus, the number of signals that is provided from the demultiplexer 11' is equal to the total number of wavelength-channels that is used. In the element 13' only five light signals are selected for high-priority traffic, these light signals having wavelengths equal to those chosen for the five high-priority channels at the transmit side. The output terminals of the element 13' are connected to receivers 15', 16' so that the high-priority traffic is switched to the receivers 15' and the low-priority traffic to separate receivers 16'. The receivers 15', 16' convert the light signals to serial electrical bit-streams provided to output lines 17', 18' respectively and they also comprise electronic circuits for determining the quality of the traffic. The control unit 19' evaluates the received quality values and decides whether the signals received have a sufficiently good quality and if the selected wavelength channels have satisfactorily low PMD-distortion. If this is not true, the control unit 19' sends signals to the cross-connect elements 7' and 13' on the transmit and receive sides respectively to make a switch of one or more high-priority channels to wavelengths used for low-priority channels. The optical cross-connect elements make the indicated switch and then the high-priority traffic is still transmitted over the optical fiber 1' in wavelength bands some of which are now changed.

Instead of the transmitters 5', 6' and the O/E/O-cross-connect element 7' on the transmit side of Fig. 6, optical tuneable transmitters 5', 6' and an optical transparent cross-connect 7' can be used provided that the transmitters can be tuned to desirable wavelengths. Then, the control unit 19' will instead send its control signals to all the transmitters 5', 6' indicating the wavelength band in which they are to transmit their output optical signals. The control unit 19' must also send a signal to the O/O-cross-connect element 7' which should switch the incoming wavelengths into an order suitable for the optical multiplexer 9'. On the receive side, an O/O cross-connect would not change the design compared to the O/E/O-case since the receivers 15', 16' normally are insensitive to the wavelength used in the WDM-system.

If tuneable lasers are used on the transmit side, the O/O cross-connect element 7' and the optical multiplexer 9' can be replaced with a fiber coupler. On the receive side the optical demultiplexer 11' and the O/O cross-connect can be replaced by a fiber coupler and tuneable optical filters. Here the control system will control the tuneable transmitters 5' on the transmit side and the tuneable filters which are connected directly in front of the receivers 15', 16'.

It is also possible to define a system operating with O/E/O-cross-connects with optical interfaces. This excludes the optical transmitters 5', 6' as well as the optical receivers 15', 16' in Fig. 6. In this case the input signal to the control logic 19' has to be taken from the O/E/O-cross-connect 13' at the receive side, since a vendor generally has no control of the type of receivers 15', 16' which are used in a WDM-system.

PMD-compensators can also be used for the different channels where each PMD-compensator works on a single-channel basis. Optical PMD-compensators can be placed on the transmit side between the last element 5; 5', 6' or 7' making an electrical-to-optical conversion and the optical multiplexer 9, 9', or on the receive side between the optical demultiplexer 11, 11' and the first device 15; 13 or 15', 16' making an optical-to-electrical conversion, e.g at the output terminals of the optical transmitters 5 or at the input terminals of the optical receivers 15 as shown in dashed lines in Fig. 5, the compensators denoted by "C". Electrical PMD-compensators can be placed anywhere where an optical-to-electrical conversion is made.

The number of channels and the minimum number of working channels have been arbitrarily chosen in the discussion and examples given above. In a real system the optimal choice of such parameters would also depend on parameters like systems- and link-statistics, price, management and choice of protection layer.

## Claims

1. An optical transmission WDM-system comprising a transmitting side and a receiving side and an optical fiber link connecting the transmitting and receiving sides, high-priority information being transmitted in the optical fiber link from the transmitting side to the receiving side in a plurality of wavelength bands, the wavelength bands having different transmission characteristics and transmission characteristics varying with time, in particular different polarization mode dispersions and/or polarization mode dispersions varying with time, **characterized by** switching means for transmitting the high-priority information in a number of the wavelength bands which is smaller than the total number of wavelength bands and control means connected to the switching means for at each instant selecting the wavelength bands used for transmitting the high-priority information to give a sufficient total quality of the transmission of the high-priority information.

2. An optical transmission WDM-system according to claim 1, **characterized by** a quality determining device connected at the receiving side for determining the quality of transmission in each of the wavelength bands and for providing a signal representing determined quality values to the control means.

3. An optical transmission WDM-system according to claim 1, **characterized in that** the switching means comprise cross-connect elements, a first cross-connect element connected at the transmitting side and a second cross-connect element connected at the receiving side, the first cross-connect element having one output terminal for each of the plurality of wavelength bands and the second cross-connect element having one input terminal for each of the plurality of wavelength bands.

4. An optical transmission WDM-system according to claim 3, **characterized in that** the cross-connect elements are arranged to switch electrical signals.

5. An optical transmission WDM-system according to claim 3, **characterized in that** the cross-connect elements are arranged to switch optical signals.

6. An optical transmission WDM-system according to claim 1, **characterized in that** the switching means on the transmitting side comprises tuneable electro-optical transmitters.

7. An optical transmission WDM-system according to claim 1 for also transmitting low-priority information on the optical fiber link, **characterized in that** the control means are arranged to select the wavelength channels not used for transmitting the high-priority information for transmitting the low-priority information.

8. An optical transmission WDM-system according to claim 1, **characterized in that** compensators for compensating polarization mode dispersion are arranged for each wavelength channel used and connected at one end of the fiber optical link.

9. A method of transmitting in a plurality of wavelength bands high-priority information over an optical fiber link connecting a transmitting side to a receiving side, the method comprising transmitting light signals in the optical fiber link in the wavelength bands, the wavelength bands having different transmission characteristics and transmission characteristics varying with time, in particular different polarization mode dispersions and/or polarization mode dispersions varying with time, **characterized by** selecting at each instant wavelength bands used for transmitting the high-priority information, the 5 number of the selected wavelength bands being smaller than the total number of wavelength bands, using only the selected wavelength bands for transmitting the high-priority information in the optical fiber link, the selecting of the wavelength bands being made to give a sufficient total quality of the transmission of the high-priority information.

10. A method according to claim 9, **characterized by** determining, at the receiving o side, values representing the quality of transmission in each of the wavelength bands and using the determined values in the selecting of wavelength bands.

11. A method according to claim 9, **characterized in that** in the selecting, at the transmitting side incoming electrical signals arriving at electrical input lines are switched to the selected wavelength bands and at the receiving side the signals received in the selected wavelength bands are switched to electrical output lines carrying electrical output signals.

12. A method according to claim 11, **characterized in that** the switching in at least one of the transmitting and receiving sides is made by switching electrical signals.

13. A method according to claim 11, **characterized in that** the switching in at least one of the transmitting and receiving sides is made by switching optical signals.

14. A method according to claim 9, **characterized in that** in the selecting at the transmitting side, the wavelength bands are selected by controlling tuneable optical transmitting elements.

15. A method according to claim 9, **characterized by** the additional step of 5 compensating polarization mode dispersion for each wavelength channel used, the compensating being made at one end of the fiber optical link.
